# EUROPÄISCHE PATENTANMELDUNG

(11) **EP 3 214 467 A1**
(43) Veröffentlichungstag der Anmeldung: **06.09.2017**
(21) Anmeldenummer: 17154596.5
(22) Anmeldetag: 03.02.2017
(51) Int. Cl.: G02B 5/00, B82Y 20/00, E06B 3/663, G02B 5/20

(54) **OPTISCHER FILTER**

(30) Priorität: 10.02.2016 AT 500832016
(71) Anmelder: AIT Austrian Institute of Technology GmbH, 1220 Wien (AT)
(72) Erfinder: BAUCH, Martin, 1140 Wien (AT); DIMOPOULOS, Theodoros, 3423 Wördern (AT)
(74) Vertreter: Gibler & Poth Patentanwälte KG

(57) **Zusammenfassung**

Bei einem optischen Filter (1) umfassend ein im Wesentlichen durchsichtiges Substrat (2) und eine zumindest mittelbar auf das Substrat (2) aufgebrachte und transluzente Metallschicht (3), wird vorgeschlagen, dass auf einer Seite der Metallschicht (3) eine Vielzahl an elektrisch leitfähigen Nanopartikeln (4) angeordnet sind, und dass die einzelnen Nanopartikeln (4) sowohl von der Metallschicht (3) als auch untereinander beabstandet sind. Weiters ist ein Verfahren zum Herstellen eines optischen Filters (1) vorgesehen.

## Beschreibung

Die Erfindung betrifft einen optischen Filter gemäß dem Oberbegriff des Patentanspruches 1.

Ein optischer Filter ist ein Filter, welcher elektromagnetische Wellen selektiv nach deren Wellenlänge durchlässt. Als optische Filter sind eine Vielzahl an auf unterschiedlichen physikalischen Effekten basierenden Systeme bekannt, wobei es bei vielen Systemen sehr aufwendig ist, wirtschaftlich einen großflächigen optischen Filter herzustellen.

Ein besonders einfach ausgebildeter und großflächig aufbringbarer optischer Filter umfasst eine sehr dünne und daher transluzente Metallschicht, welche für sichtbares Licht einen höheren Transmissionsgrad aufweist als für Infrarotstrahlung oder Wärmestrahlung. Derartige optische Filter können wirtschaftlich großflächig aufgebracht werden, beispielsweise auf Fenster um eine direkte Aufheizung eines Gebäudes durch Sonneneinstrahlung zu verringern.

Nachteilig an derartigen Filter ist, dass die Güte des Filters gering ist, wobei eine erhebliche Filterung der Infraroten Strahlung nur mit einer nicht unerheblichen Filterung von sichtbarem Licht möglich ist.

Aufgabe der Erfindung ist es daher einen optischen Filter der eingangs genannten Art anzugeben, mit welchem die genannten Nachteile vermieden werden können, welcher mit wenig Aufwand und hoher Qualität großflächig hergestellt werden kann, und deren Filtereigenschaften bezüglich der unterschiedlichen Wellenlängen gut einstellbar ist.

Erfindungsgemäß wird dies durch die Merkmale des Patentanspruches 1 erreicht.

Dadurch ergibt sich der Vorteil, dass der optische Filter mit wenig Aufwand und hoher Qualität großflächig herstellbar ist, wobei sich die spektralen Filtereigenschaften durch die Anordnung der Nanopartikel zu der benachbarten Metallschicht gut vorgeben lassen. Die durch diese Anordnung bewirkte Wechselwirkung der lokalisierten Oberflächenplasmonen in den Nanopartikel mit der benachbarten Metallschicht wird die Wirkung der lokalisierten Oberflächenplasmonen auf die elektromagnetische Welle im Vergleich zu einer Wirkung ohne der Metallschicht wesentlich verstärkt. Dadurch kann ein optischer Filter hergestellt werden, welcher im sichtbaren Licht einen hohen Transmissionsgrad aufweist, welcher dann im infraroten Teil des Spektrums stark abfällt. Dieser optische Filter ist besonders gut für Fenster eines Gebäudes geeignet, um diese für die unerwünschte Infrarotstrahlung und Wärmestrahlung undurchlässig zu machen bei gleichzeitig hoher Durchlässigkeit für sichtbares Licht.

Weiters betrifft die Erfindung ein Verfahren zum Herstellen eines optischen Filters gemäß dem Patentanspruch 10.

Aufgabe der Erfindung ist es daher weiters ein Verfahren anzugeben, mit welchem die genannten Nachteile vermieden werden können, mit welchem mit wenig Aufwand und hoher Qualität ein optischer Filter großflächig hergestellt werden kann, wobei die Filtereigenschaften des optischen Filters bezüglich der unterschiedlichen Wellenlängen gut einstellbar ist.

Erfindungsgemäß wird dies durch die Merkmale des Patentanspruches 10 erreicht.

Die Vorteile des Verfahrens entsprechen den Vorteilen des optischen Filters.

Die Unteransprüche betreffen weitere vorteilhafte Ausgestaltungen der Erfindung.

Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 ein Ausschnitt einer ersten bevorzugten Ausführungsform eines optischen Filters als schematische Darstellung in Aufsicht;
Fig. 2 ein Schnitt entlang der Linie A-A;
Fig. 3 ein Schnitt entlang der Linie B-B bei der ersten bevorzugten Ausführungsform des optischen Filters;
Fig. 4 ein Schnitt entlang der Linie B-B bei einer zweiten bevorzugten Ausführungsform des optischen Filters; und
Fig. 5 eine Gegenüberstellung der spektralen Transmissionsverteilung zwischen einer dritten bevorzugten Ausführungsform des optischen Filters und einer dünnen Metallschicht als Diagramm.

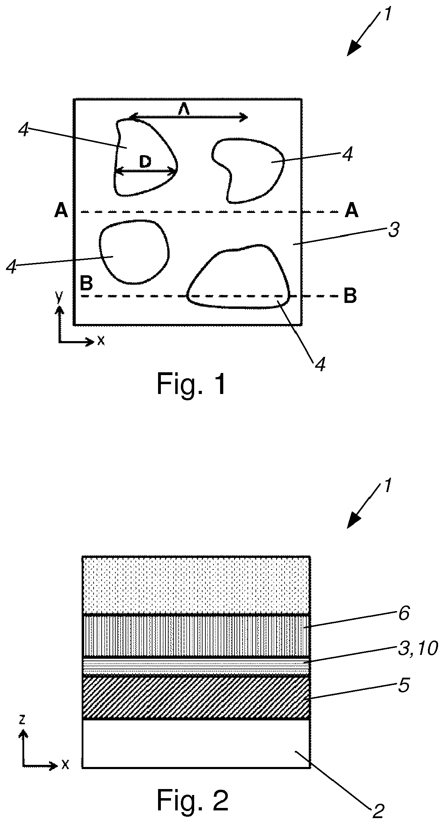

Die Fig. 1 bis 4 zeigen zumindest Teile von bevorzugten Ausführungsformen eines optischen Filters 1 umfassend ein im Wesentlichen durchsichtiges Substrat 2 und eine zumindest mittelbar auf das Substrat 2 aufgebrachte und transluzente Metallschicht 3. Der optische Filter 1, welcher auch als spektraler elektromagnetischer Filter bezeichnet werden kann, ist ein optisches Bauelement mit einem wellenlängenabhängigen Transmissionsgrad für elektromagnetische Wellen im spektralen Bereich von sichtbaren Licht und den umliegenden spektralen Bereich wie Infrarot und Ultraviolett. Der optische Filter 1 weist in einem ersten Bereich des elektromagnetischen Spektrums einen höheren Transmissionsgrad auf als in einem zweiten Bereich des elektromagnetischen Spektrums. Der Transmissionsgrad ist hierbei der Quotient der durchgelassenen Strahlungsintensität zu der einfallenden Strahlungsintensität. Der optische Filter 1 ist insbesondere ein flächiges Bauelement.

Der optische Filter 1 weist ein Substrat 2 auf, welches als Träger dient. Das Substrat 2 ist aus einem Material ausgebildet, welches insbesondere im Spektrum des sichtbaren Lichts im Wesentlichen durchsichtig ist.

Das Substrat 2 kann insbesondere im Wesentlichen eben sein. Im Wesentlichen eben bedeutet hierbei, dass das Substrat 2 im makroskopischen eben ist. Eine Flächennormale des Substrates 2 ist hierbei eine Normale auf einen makroskopischen Bereich des Substrates 2.

Bevorzugt kann das Substrat 2 aus Glas sein. Hierbei kann der optische Filter 1 direkt auf einer Glasscheibe ausgebildet sein.

Alternativ kann das Substrat 2 aus Kunststoff sein. Bevorzugt kann das Substrat 2 als Kunststofffolie ausgebildet sein. Derart kann der optische Filter 1 leicht nachträglich auf bestehende Scheiben aufgebracht, insbesondere aufgeklebt, werden.

Weiters kann vorgesehen sein, dass das Substrat 2 eine strukturierte Polymerschicht oder Monomerschicht aufweist.

Auf dem Substrat 2 ist zumindest mittelbar eine transluzente Metallschicht 3 aufgebracht. Zumindest mittelbar bedeutet, dass die Metallschicht 3 sowohl unmittelbar auf dem Substrat 2 aufgebracht sein kann, oder weitere Schichten zwischen dem Substrat 2 und der Metallschicht 3 angeordnet sein können. Die Metallschicht 3 weist eine Dicke auf, bei welcher diese noch transluzent, also für Licht durchscheinend oder transparent, ist. Die Metallschicht 3 kann insbesondere eben sein.

Vorgesehen ist, dass auf einer Seite der Metallschicht 3 eine Vielzahl an elektrisch leitfähigen Nanopartikeln 4 angeordnet sind, und dass die einzelnen Nanopartikeln 4 sowohl von der Metallschicht 3 als auch untereinander beabstandet sind. Die Nanopartikel 4 können auch als Nanostrukturen bezeichnet werden. Jedes Nanopartikel 4 stellt daher für sich eine von der Umgebung abgegrenzte Insel aus einem elektrisch leitfähigen Material dar. Insbesondere sind die Nanopartikeln 4 metallisch elektrisch leitfähig, wobei die elektrische Lesefähigkeit durch ein freies Elektronengas im Nanopartikeln 4 bewirkt wird.

Die elektrisch leitfähigen Nanopartikeln 4 können insbesondere flächig und/oder linienförmig sein.

Als flächige Nanopartikel 4 werden hierbei Geometrien bezeichnet, deren Erstreckung in einer Raumrichtung, insbesondere einer Flächennormalen auf das Substrat 2, gegenüber den beiden anderen Raumrichtungen wesentlich verkürzt ist, wobei insbesondere auch die Erstreckung in die beiden anderen Raumrichtungen im Bereich weniger µm oder sub-µm sind. Die Nanopartikel 4 können dann auch als Nanoplättchen bezeichnet werden. Die Nanopartikel 4 können ebenfalls eben sein.

Die der Flächennormalen auf das Substrat 2 entsprechende Raumrichtung wird in den Fig. 2 bis 4 als z-Achse bezeichnet. Die beiden anderen Raumrichtungen werden in den Fig. 1 bis 4 als x-Achse und als y-Achse bezeichnet. Zu beachten ist, dass die Größenverhältnisse in den Fig. 1 bis 4 stark verzerrt wiedergegeben sind. In den Fig. 1 bis 4 ist weiters lediglich ein kleiner Ausschnitt aus dem sich über eine weit größere Fläche erstreckenden optischen Filter 1 dargestellt.

Insbesondere kann vorgesehen sein, dass die Nanopartikel 4 rund, insbesondere im Wesentlichen kreisrund, ausgebildet sind. Die Nanopartikel 4 können daher auch insbesondere scheibenförmig sein.

Als linienförmige Nanopartikel 4 werden hierbei Geometrien bezeichnet, bei welcher die Erstreckung in einer, insbesondere normal zu der Flächennormalen auf das Substrat 2 stehenden, der Länge entsprechende Raumrichtung wesentlich länger ist als die beiden anderen quer zur Länge stehenden Raumrichtungen, wobei insbesondere die quer zur Länge stehenden Raumrichtungen im Bereich weniger µm oder sub-µm sind. Durch linienförmige Nanopartikel 4 kann der optische Filter 1 polarisationsabhängig ausgebildet werden. Die Länge der linienförmigen Nanopartikel 4 kann bis zu mehreren µm, üblicherweise 20µm bis 50µm, entsprechen. Derartige Nanopartikel 4 sind beispielsweise Nanodrähte.

Besonders bevorzugt kann vorgesehen sein, dass alle Nanopartikel 4 im Wesentlichen die gleiche Form und Dimensionierung aufweisen.

Die Nanopartikel 4 können aber auch eine unregelmäßige Form aufweisen.

Die Nanopartikel 4 sind aus einem elektrisch leitfähigen Material, insbesondere Metall. Besonders bevorzugt kann vorgesehen sein, dass die Nanopartikel 4 und die Metallschicht 3 aus demselben Material sind.

Bevorzugt kann vorgesehen sein, dass die Metallschicht 3 und/oder die Nanopartikel 4 aus einer metallischen Legierungen, bevorzugt Nickelaluminium, ausgebildet sind.

Insbesondere kann vorgesehen sein, dass die Metallschicht 3 und/oder die Nanopartikel 4 umfassend Gold, Silber, Kupfer, Aluminium oder Legierungen aus diesen Metallen ausgebildet sind. Besonders bevorzugt können die Metallschicht 3 und die Nanopartikel 4 aus Silber sein.

In den Nanopartikel 4 bilden sich bei einer Anregung durch Licht, insbesondere Licht mit dem Spektrum der Sonnenstrahlung, lokalisierte Oberflächenplasmonen aus. Ein Plasmon ist ein Quasiteilchen welches durch die kollektive Anregung der Elektronen von in Festkörpern auftretenden Wellen gebildet wird. Ein Oberflächenplasmon ist ein derartiges Quasiteilchen, welches über die Oberfläche eines Festkörpers propagiert. Ein lokalisiertes Oberflächenplasmon, oft auch als Partikelplasmon bezeichnet, ist eine spezielle Form des Oberflächenplasmons, welches sich nicht frei über die Oberfläche ausbreiten kann, sondern räumlich eingesperrt und daher lokalisiert ist. Hierbei ist es bekannt derartige lokalisierte Oberflächenplasmonen durch Nanostrukturen, beispielsweise die Nanopartikel 4, zu bilden. Derartige lokalisierte Oberflächenplasmonen können hierbei mit einfallenden elektromagnetische Wellen wechselwirken und zu einer erhöhten oder verringerten Reflexion spektraler Bestandteile der einfallenden Strahlung führen.

Die Nanopartikel 4 sind sowohl von der Metallschicht 3 als auch untereinander beabstandet, sodass sich in den Nanopartikeln 4 lokalisierte Oberflächenplasmonen bilden können. Hierbei kann es durchaus sein, dass herstellungsbedingt sich einige Nanopartikel 4 berühren, wie dies beispielsweise beim Abscheiden von Nanodrähten bei einigen oftmals sein kann. Sofern sich weiterhin lokalisierte Oberflächenplasmonen in diesen Nanopartikeln 4 ausbilden können, sind diese als untereinander beabstandet anzusehen.

Weiters kann vorgesehen sein, dass die einzelnen Nanopartikeln 4 sowohl von der Metallschicht 3 als auch untereinander elektrisch isoliert oder nur mittels eines Halbleiters verbunden sind. Hierbei hat sich gezeigt, dass sich bereits bei einem Halbleiter, bei welchen die elektrische Leitfähigkeit nicht wie bei einem Metall durch freie Elektronen verursacht wird, die Ausbreitung der Plasmonen bereits ausreichend begrenzt ist, sodass sich in den Nanopartikeln 4 die lokalisierte Oberflächenplasmonen ausbilden können.

Durch die Anordnung mit der Metallschicht 3 und den Nanopartikeln 4 wird die Wechselwirkung zwischen den lokalisierten Oberflächenplasmonen und der einfallenden elektromagnetischen Welle insbesondere durch Resonanzeffekte wesentlich verstärkt. Dies erfolgt u.a. aufgrund einer weiteren Wechselwirkung der lokalisierten Oberflächenplasmonen in den Nanopartikeln 4 mit den Elektronen in der Metallschicht 3. Diese Wechselwirkung kann hierbei durch die Ausbildung einer Spiegelladung in der Metallschicht 3 erzeugt werden, wodurch die lokalisierten Oberflächenplasmonen in den Nanopartikeln 4 mit den eigenen Spiegelladungen in der Metallschicht 3 wechselwirken, und es zu verstärkenden Resonanzeffekten kommen kann.

Dadurch ergibt sich der Vorteil, dass der optische Filter 1 mit wenig Aufwand und hoher Qualität großflächig herstellbar ist, wobei sich die spektralen Filtereigenschaften durch die Anordnung der Nanopartikel 4 zu der benachbarten Metallschicht 3 gut vorgeben lassen. Die durch diese Anordnung bewirkte Wechselwirkung der lokalisierten Oberflächenplasmonen in den Nanopartikel 4 mit der benachbarten Metallschicht 3 wird die Wirkung der lokalisierten Oberflächenplasmonen auf die elektromagnetische Welle im Vergleich zu einer Wirkung ohne der Metallschicht 3 wesentlich verstärkt. Dadurch kann ein optischer Filter 1 hergestellt werden, welcher im sichtbaren Licht einen hohen Transmissionsgrad aufweist, welcher dann im infraroten Teil des Spektrums stark abfällt. Dieser optische Filter ist besonders gut für Fenster eines Gebäudes geeignet, um diese für die unerwünschte Infrarotstrahlung und Wärmestrahlung undurchlässig zu machen bei gleichzeitig hoher Durchlässigkeit für sichtbares Licht.

Weiters ist ein Verfahren zum Herstellen des optischen Filters 1 vorgesehen, wobei auf das im Wesentlichen durchsichtiges Substrat 2 zumindest mittelbar die transluzente Metallschicht 3 aufgebracht wird, wobei auf einer Seite der Metallschicht 3 eine Vielzahl elektrisch leitfähigen Nanopartikeln 4 erzeugt werden, wobei die einzelnen Nanopartikeln 4 sowohl von der Metallschicht 3 als auch untereinander beabstandet sind.

Durch die Wahl der Dimensionen der Anordnung von Metallschicht 3 und Nanopartikel können Erhöhungen oder Verringerungen des Transmissionsgrades in verschiedenen Bereichen des Spektrums gut vorgegeben werden. Der optische Filter 1 kann beispielsweise verwendet werden um eine Färbung im sichtbaren Bereich des Lichtes zu erzeugen.

Besonders bevorzugt kann vorgesehen sein, dass der optische Filter 1 als Infrarotsperrfilter ausgebildet ist. Ein Infrarotsperrfilter ist ein optischer Filter 1, welcher für sichtbares Licht einen hohen Transmissionsgrad aufweist. Insbesondere kann ein gemittelter Transmissionsgrad im Spektrum des sichtbaren Lichts über 60%, bevorzugt über 80%, sein. Weiters kann insbesondere der gemittelte Transmissionsgrad im Spektralbereich von 700 nm bis 50 µm kleiner als 10% sein. Hierbei eignet sich der optische Filter 1 besonders gut als Infrarotsperrfilter, da sich gezeigt hat dass durch die Wechselwirkung zwischen den Nanopartikel 4 und der Metallschicht eine besonders geringer und auch schnell abfallender Transmissionsgrad im Infrarotspektralbereich möglich ist, wodurch auch ein besonders hoher Transmissionsgrad im sichtbaren Licht möglich ist. Weiters hat sich gezeigt, dass durch die Wechselwirkung der Plasmonen zwischen Metallschicht 3 und den Nanopartikel 4 die Plasmonenfequenzen zu höheren Wellenlängen hin verschoben sind, wodurch der Einfluss des optischen Filters 1 auf den Infrarotspektralbereich besonders hoch ist.

Besonders bevorzugt kann vorgesehen sein, dass der optische Filter 1, insbesondere entlang der Flächennormale des Substrates 2 betrachtet, eine einzige Metallschicht 3 aufweist. Es kann daher insbesondere vorgesehen sein, dass der optische Filter 1 nicht mehrere übereinander angeordnete Metallschichten 3 aufweist, welche einen durch den optischen Filter 1 führenden Lichtstrahl nacheinander absorbieren, sondern dass der durch den optischen Filter 1 führende Lichtstrahl lediglich eine einzige Metallschicht 3 durchquert. Weitere nichtmetallische Schichten 5,6 können weiterhin vorhanden sein. Dadurch kann ein besonders hoher Transmissionsgrad im Spektrum des sichtbaren Lichts erreicht werden, da jede Metallschicht einen Teil des Lichts im sichtbaren Spektrum absorbiert.

Weiters kann eine Fensterscheibe mit dem optischen Filter 1 auf zumindest einer Seite der Fensterscheibe vorgesehen sein. Hierbei kann der optischen Filter 1 direkt auf einer Seite der Fensterscheibe ausgebildet sein, wobei das Glas der Fensterscheibe an sich das Substrat 2 ausbilden kann. Alternativ kann der optische Filter 1 an das Glas der Fensterscheibe befestigt, insbesondere aufgeklebt, sein.

Als weitere Anwendung des optischen Filters 1 kann vorgesehen sein, dass der optische Filter 1 bei einem optischen Element für ein optisches Gerät verwendet wird.

Bevorzugt kann vorgesehen sein, dass die Metallschicht 3 über eine gesamte Oberfläche des optischen Filters 1 elektrisch leitend ist. Mit anderen Worten kann vorgesehen sein, dass eine erste Stirnseite des optischen Filters 1 mit einer gegenüberliegenden zweiten Stirnseite des optischen Filters 1 über die Metallschicht 3 elektrisch leitend verbunden ist. Dadurch kann der optische Filter 1 auch als durchsichtige Elektrode verwendet werden.

Besonders bevorzugt kann ein optoelektronisches Gerät, insbesondere ein Bildschirm oder eine Solarzelle, vorgesehen sein, wobei eine durchsichtige Elektrode des optoelektronischen Geräts den optischen Filter 1 aufweist. Dadurch kann ein Aufheizen des optoelektronischen Geräts durch direkte Sonneneinstrahlung verringert werden, wodurch der Wirkungsgrad und/oder die Lebensdauer des optoelektronischen Geräts erhöht wird.Insbesondere kann vorgesehen sein, dass eine Dicke der Metallschicht 3 und/oder eine Dicke der Nanopartikel 4 kleiner als 30 nm, insbesondere kleiner als 15 nm, ist. Die Dicke ist in Richtung der Flächennormale des Substrates 2 zu messen. Dadurch kann ein hoher Transmissionsgrad für sichtbares Licht erreicht werden.

Bevorzugt kann vorgesehen sein, dass die Dicke der Metallschicht 3 und/oder die Dicke der Nanopartikel 4 größer als 2 nm ist. Dadurch kann eine ausreichende elektrische Leitfähigkeit für das Ausbilden von Plasmonen erreicht werden.

Weiters kann vorgesehen sein, dass die Dicke der Metallschicht 3 und/oder die Dicke der Nanopartikel 4 im Wesentlichen konstant ist.

Bevorzugt kann vorgesehen sein, dass die Nanopartikel 4 in zumindest einer Raumrichtung eine Erstreckung zwischen 100 nm und 800 nm, insbesondere zwischen 200 nm und 400 nm, aufweisen. Diese Erstreckung kann bei einem flächigen Nanopartikel 4 insbesondere einem Durchmesser des Nanopartikels 4 entsprechen. Auch bei einem linienförmigen Nanopartikel 4 kann diese Erstreckung dem Durchmesser entsprechen, wobei quer zu einer Längsrichtung derartiger linienförmiger Nanopartikel 4 polarisiertes Licht lokalisierte Oberflächenplasmonen anregt. Der Durchmesser ist insbesondere in einer Raumrichtung zu messen, welche parallel zu der makroskopischen Oberfläche des Substrates 2 ist, also senkrecht zu einer Flächennormalen des Substrates 2. In diesem Bereich des Durchmessers können sich besonders gut lokalisierte Oberflächenplasmonen ausbilden. Bei stark variierender Größe der Nanopartikel sollen zumindest 75% der Nanopartikel 4 eine Erstreckung in dem angegebenen Bereich aufweisen. Der Durchmesser ist in der Fig. 1 durch den Doppelpfeil mit dem Buchstaben D angedeutet.

Besonders bevorzugt kann die maximale Erstreckung der Nanopartikel 4 im Wesentlichen 300 nm betragen.

Weiters kann vorgesehen sein, dass ein mittlerer Abstand der Nanopartikel 4 zueinander zwischen 200 nm und 5000 nm, insbesondere 300 nm bis 1000 nm, beträgt. Besonders bevorzugt kann der mittlere Abstand der Nanopartikel 4 zueinander im Wesentlichen 400 nm betragen. Der mittlere Abstand der Nanopartikel 4 zueinander ist der gemittelte Abstand der Mittelpunkte der Nanopartikel 4 zu deren unmittelbar benachbarten Nanopartikel. Zur Bestimmung ist es ausreichend den mittleren Abstand einer ausreichend großen Zahl an Nanopartikel 4, beispielsweise 1000, zu bestimmen. Der Abstand zwischen zwei Nanopartikel 4 ist in der Fig. 1 durch den Doppelpfeil mit dem Buchstaben groß Lambda A angedeutet. Es hat sich gezeigt, dass in diesem Wertebereich der Abstand der Nanopartikel 4 untereinander groß genug ist, um eine gegenseitige negative Beeinflussung zu verhindern, aber gering genug ist um einen ausreichenden Effekt zu haben.

Insbesondere kann vorgesehen sein, dass die Nanopartikel 4 in einer periodischen Anordnung angeordnet sind. Diese periodische Anordnung kann ein Gittermuster oder ein hexagonales Muster.

Alternativ kann vorgesehen sein, dass die Nanopartikel 4 zufällig über eine Oberfläche des Substrates 2 verteilt sind.

Bevorzugt kann vorgesehen sein, dass eine Fläche der Metallschicht 3 größer ist als eine Fläche aller Nanopartikel. Diese Fläche ist die in Richtung der Flächennormale auf das Substrat 2 gesehene Fläche.

Die Anordnung der Metallschicht 3 und der Nanopartikel 4 kann auf unterschiedliche Weise hergestellt werden, wobei dem Fachmann mehrere Verfahren bekannt sind um Nanostrukturen herzustellen.

Das Verfahren kann insbesondere einen Beschichtungsschritt umfassen, in welchem zumindest die Metallschicht 3 aufgebracht wird. Der Beschichtungsschritt kann insbesondere mit für die Halbleitertechnologie üblichen Beschichtungsverfahren durchgeführt werden. Bevorzugt kann der Beschichtungsschritt mittels physikalischer Gasabscheidungsverfahren, sogenannte PVD-Verfahren, durchgeführt werden. Bei diesen Verfahren wird das Material für die Beschichtung durch physikalische Effekte, beispielsweise Zerstäuben oder thermisches Verdampfen, in die Gasphase übergeführt und schlägt sich auf einer zu beschichtenden Oberfläche nieder.

Besonders bevorzugt kann der Beschichtungsschritt mittels Magnetron-Kathodenzerstäubung, auch als Magnetron-Sputtering bekannt, durchgeführt werden. Mittels Magnetron-Kathodenzerstäubung können wirtschaftlich große Flächen mit gleichbleibender Dicke beschichtet werden, wobei sowohl Metalle als auch nicht leitende Materialien, beispielsweise Oxide, als Schichtmaterial verwendet werden können. Auch bezüglich der verwendbaren Materialien für das Substrat 2 bietet Magnetron-Kathodenzerstäubung große Freiheiten.

Ein weiteres bevorzugtes Verfahren für den Beschichtungsschritt kann thermisches Verdampfen sein, bei welchem ein Material verdampft wird und an dem Substrat 2 zu einer Schicht kondensiert.

Weiters kann das Verfahren einen Oberflächenstrukturierungsschritt aufweisen, wobei im Oberflächenstrukturierungsschritt die Form der Nanopartikel 4 vorgegeben wird. In dem Oberflächenstrukturierungsschritt wird im optischen Filter 1 eine Oberflächenstruktur, sei es auf dem Substrat 1 oder einer der darüberliegenden Schichten, erzeugt.

Besonders bevorzugt kann vorgesehen sein, dass die Nanopartikeln 4 durch eine Kombination eines Beschichtungsschrittes und eines Oberflächenstrukturierungsschrittes erzeugt werden. Dadurch kann auf einfache Weise und in wenigen Schritten die Anordnung aus der Metallschicht 3 und der Nanopartikel 4 hergestellt werden.

Gemäß einer alternativen Ausführungsform können die Nanopartikel 4 gesondert hergestellt werden, und anschließend zumindest mittelbar auf dem Substrat oder der Metallschicht aufgebracht werden. Diese alternative Ausführungsform kann insbesondere bei der Verwendung von Nanodrähten als Nanopartikel 4 zur Anwendung kommen, wobei die Nanodrähte insbesondere aus einer Lösung abgeschieden werden können.

Besonders bevorzugt wird der Oberflächenstrukturierungsschritt mittels eines abtragenden Verfahrens, besonders bevorzugt mittels eines Lithografieverfahrens, durchgeführt. Bei einem abtragenden Verfahren wird zuerst eine gleichförmige Schicht erstellt, welche dann selektiv wieder abgetragen wird. Derartige abtragende Verfahren sind üblicherweise sogenannte Top-Down Verfahren, bei welchen die endgültige Struktur gut von außen vorgegeben werden können. Dabei werden für den Oberflächenstrukturierungsschritt in der Herstellung des optischen Filters 1 selektiv Bereich der Oberfläche, sei es von dem Substrat 2 oder einer auf dem Substrat 2 aufgebrachten Beschichtung, abgetragen.

Insbesondere vorgesehen sein, dass der Oberflächenstrukturierungsschritt mittels Nanoprägelithographie erfolgt. Die Nanoprägelithographie, häufig auch als Nanoimprint Litography, NIL oder Nanoimprint bezeichnet, ist ein Prägeverfahren, welches zum Herstellen von Nanostrukturen verwendet werden kann. Hierbei ist ein Stempel mit dem Negativ erforderlich, welcher seinerseits mittels Nanoprägelithographie oder einem anderen Nanostrukturierungsverfahren hergestellt werden kann. Der Stempel wird beim Oberflächenstrukturierungsschritt in ein Positiv gedrückt, wobei dem Positiv das Relief des Stempels eingeprägt wird. Das Positiv kann insbesondere aus Kunststoff, bevorzugt Monomere oder Polymere, sein. Der Stempel wird erst nach einem Aushärten des Positivs entfernt. Das Aushärten kann insbesondere mittels UV-Strahlung erfolgen. Bei der Verwendung von Kunststoff als Substrat 2 kann das Positiv unmittelbar das Substrat 2 sein. Alternativ kann das Positiv anschließend weggeätzt werden, wobei das Positiv eine Ätzmaske für das darunterliegende Material, insbesondere ein Substrat 2 aus Glas oder eine Beschichtung, darstellt. Vorteilhaft an der Nanoprägelithographie ist, dass diese besonders gut geeignet ist Nanostrukturen wirtschaftlich auch auf großen Flächen zu erzeugen. Durch den Stempel sind die zu erzeugenden Oberflächenreliefs besonders gut vorgebbar und mit geringen Toleranzen herstellbar. Weiters erlaubt es die Nanoprägelithographie Oberflächenreliefs zu erzeugen, welche einen besonders steilen Übergang zwischen einzelnen Erhebungen 8 und Vertiefungen 9 erlauben.

Ein weiteres mögliches Verfahren für den Oberflächenstrukturierungsschritt ist das sogenannte Hot Thermal Embossing. Das Hot Thermal Embossing kommt der Nanoprägelithografie sehr nahe, wobei üblicherweise ein dickeres Positiv verwendet wird und das Positiv durch eine erhöhte Temperatur formbar gemacht wird.

Ein weiteres mögliches Verfahren für den Oberflächenstrukturierungsschritt ist ein Sol-Gel-Verfahren, bei welchen das Sol-Gel vor dem erstarren strukturiert wird.

Alternativ zu den abtragenden Verfahren können in dem Oberflächenstrukturierungsschritt selektiv Nanostrukturen abgeschieden werden. Dies kann insbesondere durch die Verwendung selbst assemblierender Verfahren durchgeführt werden oder indem gezielt Störungen auf einer Oberfläche aufgebracht werden, welche anschließend als Keimzellen für eine Inselbildung bei einem Beschichtungsverfahren verwendet werden können. Derartige Verfahren werden auch als Bottom-Up Verfahren bezeichnet.

Weiters kann vorgesehen sein, dass auf zumindest einer Seite, insbesondere auf beiden Seiten, der Metallschicht 3 und/oder der Nanopartikeln 4 eine Schicht 5,6 eines transparenten Festkörpers angeordnet ist. Diese Schicht 5,6 ist dabei aus einem Material, welches im Vergleich zu Metall auch bei größeren Schichtdicken noch transparent bleibt. Die Schicht 5,6 kann insbesondere eine Oxidschicht sein. Die Schicht 5,6 eines transparenten Festkörpers kann daher besonders bevorzugt durchsichtig sein. Durch die wenigstens eine Schicht 5,6 eines transparenten Festkörpers kann insgesamt die Reflexion des optischen Filters 1 im Bereich des sichtbaren Lichts herabgesetzt werden, da optisch ein stufenweiser Übergang der Brechungsindizes zwischen der Metallschicht 3 beziehungsweise der Nanopartikel 4 und der Umgebung erreicht werden kann. Weiters kann die wenigstens eine Schicht 5,6 eines transparenten Festkörpers die Metallschicht 3 und/oder die Nanopartikel 4 gegenüber äußeren Umwelteinflüssen absiegeln, wodurch der optische Filter haltbarer wird.

Hierbei kann vorgesehen sein, dass lediglich auf einer Seite, also einer dem Substrat 2 zugewandten oder einer dem Substrat 2 abgewandten Seite der Metallschicht 3 und/oder der Nanopartikel 4, eine Schicht 5,6 eines transparenten Festkörpers angeordnet ist.

Bevorzugt kann vorgesehen sein, dass die Schicht 5,6 eines transparenten Festkörpers auf beiden Seiten, also sowohl der dem Substrat 2 zugewandten als auch der dem Substrat 2 abgewandten Seite der Metallschicht 3 und/oder Nanopartikel 4, angeordnet ist. Insbesondere können sowohl die Metallschicht 3 als auch die Nanopartikel 4 in diese Schicht 5,6 eingebettet werden.

Hierbei kann zwischen dem Substrat 2 und der Metallschicht 3 und/oder zwischen dem Substrat 2 und den Nanopartikeln 4 eine erste Schicht 5 eines transparenten Festkörpers angeordnet sein.

Weiters kann auf der dem Substrat 2 abgewandten Seite der Metallschicht 3 und/oder der Nanopartikel 4 eine zweite Schicht 6 eines transparenten Festkörpers angeordnet sein.

Insbesondere kann vorgesehen sein, dass im Beschichtungsschritt nacheinander die erste Schicht 5 eines transparenten Festkörpers, eine Metallbeschichtung 10 und die zweite Schicht 6 eines transparenten Festkörpers auf dem Substrat 2 abgeschieden wird. Die Metallschicht 3 kann insbesondere zumindest ein Teil der Metallbeschichtung 10 sein. Weiters kann vorgesehen sein, dass die Metallbeschichtung 10 die Metallschicht 3 ausbildet.

Weiters kann vorgesehen sein, dass eine Dicke der zumindest einen Schicht 5,6 eines transparenten Festkörpers, also der ersten Schicht 5 und/oder der zweiten Schicht 6, kleiner ist als 200 nm.

Die zumindest eine Schicht 5, 6 kann insbesondere aus Oxiden ausgebildet sein.

Die zumindest eine Schicht 5, 6 kann insbesondere als dielektrische Schicht, also nichtleitende Schicht, ausgebildet sein. Dabei kann die zumindest eine Schicht 5, 6 bevorzugt aus ZnO, TiO2, SiO2, MgO, Ta₂O₅, NiO, MoOₓ, WO₃, CuₓO, TeO₂, Nb₂0₅ oder ZnS ausgebildet sein.

Insbesondere kann die Wahl des Materials der zumindest einen Schicht 5,6 eines transparenten Festkörpers von der Austrittsarbeit abhängig gemacht werden, um die durchsichtige Elektrode als Anode oder Kathode in optoelektronischen Geräten zu benutzen.

Bevorzugt kann die zumindest eine Schicht 5, 6 eines transparenten Festkörpers aus einem transparenten Halbleiter sein. Bevorzugt kann der transparenten Halbleiter ITO (Indium-Zinn-Oxid), AZO (Aluminium-Zink-Oxid), FTO (Flour-Zinn-Oxid), ATO (Antimon-Zinn-Oxid), Nb:TiO2, Ta:TiO2, Zn:ITO, In:ZnO sein. Die transparenten Halbleiter können amorph oder polykristallin sein. Hierbei hat sich überraschenderweise gezeigt, dass trotz der durch diese Halbleiter gebildete elektrische Verbindung zwischen den Nanopartikeln 4 und der Metallschicht 3 sich lokalisierte Oberflächenplasmonen in den Nanopartikeln 4 ausbilden können. Es ist daher möglich in vorteilhafter Weise bei dem optischen Filter 1 durch die Verwendung transparenter Halbleiter die elektrische Leitfähigkeit insgesamt zu erhöhen, wodurch eine transparente Elektrode mit guten Leitwerten und hohen Transmissionsgrad im sichtbaren Licht ausgebildet werden kann.

Wie beispielhaft in der ersten bevorzugten Ausführungsform des optischen Filters 1 dargestellt kann vorgesehen sein, dass der Oberflächenstrukturierungsschritt vor dem Beschichtungsschritt erfolgt.

Besonders bevorzugt kann bei dem Verfahren vorgesehen sein, dass in dem Oberflächenstrukturierungsschritt in das Substrat 2 ein Oberflächenrelief mit durch Flanken 7 voneinander getrennte Erhebungen 8 und Vertiefungen 9 ausgebildet wird, und dass nachfolgend zu dem Oberflächenstrukturierungsschritt der Beschichtungsschritt durchgeführt wird. Dieser Oberflächenstrukturierungsschritt kann bevorzugt mit den bereits beschriebenen Verfahren Nanoprägelithografie oder Hot Thermal Embossing durchgeführt werden. Durch die Flanken 7 des Oberflächenreliefs wird in dem Beschichtungsschritt eine zumindest mittelbar auf das Substrat 2 aufgebrachte Metallbeschichtung 10 in die untereinander beabstandete Metallschicht 3 und die Nanopartikel 4 aufgeteilt. Hierbei ist die Metallbeschichtung 10 an den Flanken 7 unterbrochen. Dadurch ergibt sich unter anderem der Vorteil, dass ein einziger Beschichtungsschritt ausreichend ist um die Anordnung der Metallschicht 3 und der Nanopartikel 4 auszubilden. Weiters weist die Metallschicht 3 durch die Flanken 7 Löcher 13 auf, welche im Wesentlichen gegengleich zu den Nanopartikel 4 sind. Am Rand dieser Löcher 13 können sich ebenfalls lokalisierte Oberflächenplasmonen bilden.

Alternativ kann das Oberflächenrelief des Oberflächenstrukturierungsschrittes in der ersten Schicht 5 eines transparenten Festkörpers, welche zwischen dem Substrat 2 und der Metallschicht 3 angeordnet ist, ausgebildet werden. Eine derartige Strukturierung der ersten Schicht 5, 6 eines transparenten Festkörpers kann insbesondere dann erfolgen, wenn die erste Schicht 5 eines transparenten Festkörpers mittels eines Sol-Gel-Verfahrens erzeugt wird.

In einer alternativen, in den Fig. nicht dargestellten Ausführungsform des optischen Filters 1 kann vorgesehen sein, dass der optische Filter 1 abgesehen von der Metallschicht 3 über keine weiteren Schichten verfügt. Hierbei kann die Metallschicht 3 unmittelbar auf dem Substrat 2 aufgebracht sein.

Zum Abscheiden der Metallbeschichtung 10 kann insbesondere ein gerichtetes Beschichtungsverfahren verwendet werden, bei welchem die Partikel für den Schichtaufbau insbesondere in einem kleinen Raumwinkel normal zu einer Oberfläche des Substrates auftreffen. Dieses Beschichtungsverfahren kann insbesondere ein physikalisches Gasphasenabscheidungsverfahren sein, bei welchen ein Großteil der Teilchen aus Richtung der Quelle des physikalischen Gasphasenabscheidungsverfahren kommen. Dadurch kann im Gegensatz zu einem chemischen Abscheideverfahren erreicht werden, dass nur wenige Metallatome an den Flanken 7 auftreffen und dadurch an den Flanken 7 keine beziehungsweise eine nur eine schlecht leitende Schicht abgeschieden wird.

Hierbei kann bei dem optischen Filter 1 vorgesehen sein, dass das Substrat 2 das Oberflächenrelief mit durch die Flanken 7 voneinander getrennte Erhebungen 8 und Vertiefungen 9 aufweist, und dass die Flanken 7 derart ausgebildet sind, dass eine zumindest mittelbar auf das Substrat 2 aufgebrachte Metallbeschichtung 10 durch das Oberflächenrelief in die untereinander beabstandete Metallschicht 3 und die Nanopartikel 4 aufgeteilt wird. Die Metallschicht 3 und die Nanopartikel 4 sind dabei Teile derselben Metallbeschichtung 10, wobei sich durch den stufenweise Aufbau des Oberflächenreliefs die Metallbeschichtung 10 und etwaige Schichten 5,6 eines transparenten Festkörpers die Nanopartikel 4 gegenüber der Metallschicht 3 in der Höhe versetzt zueinander sind, wodurch diese beabstandet sind.

Insbesondere kann vorgesehen sein, dass die Flanken 7 von der Flächennormale auf das Substrat 2 höchstens um einen Winkel von 10°, insbesondere 5°, abweichen. Die Flanken 7 können daher insbesondere als Steilflanken ausgebildet sein.

Weiters kann vorgesehen sein, dass die Flanken 7 überhängend sind, wodurch ebenfalls eine Beschichtung der Flanken 7 verhindert werden kann.

Insbesondere kann das Oberflächenrelief mittels Nanoprägelithographie hergestellt werden, welche zuverlässig besonders steile Flanken 7 ermöglicht.

Besonders bevorzugt kann vorgesehen sein, dass das Oberflächenrelief einen ersten Oberflächenbereich auf einer ersten Höhe und zweite Oberflächenbereiche auf einer, von der ersten Höhe unterschiedlichen, zweiten Höhe aufweist, wobei die im ersten Oberflächenbereich abgeschiedene Metallbeschichtung 10 die Metallschicht 3 ausbildet und die auf den zweiten Oberflächenbereichen abgeschiedene Metallbeschichtung 10 die Nanopartikel 4 ausbildet. Die Höhe beschreibt hierbei die Position entlang der Flächennormalen zu dem Substrat 2. Die erste Höhe ist von der zweiten Höhe um einen Höhenunterschied beabstandet, wobei der Höhenunterschied direkt an dem Übergang zwischen dem ersten Oberflächenbereich und einem zweiten Oberflächenbereiche gemessen wird. Der Höhenunterschied entspricht daher der Höhe der jeweiligen Flanke 7.

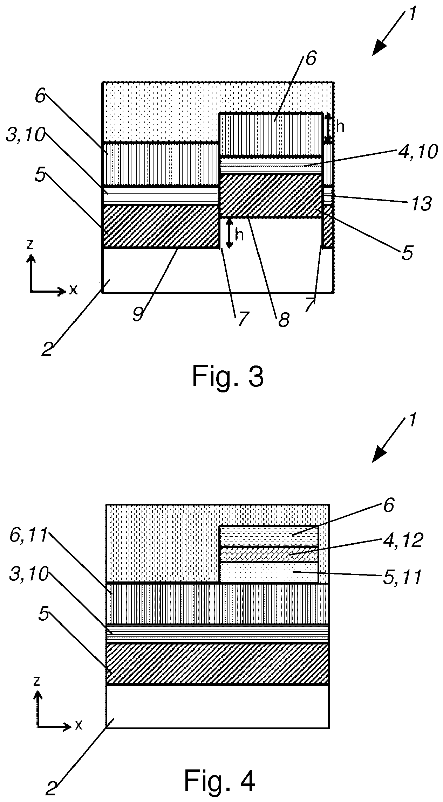

Insbesondere kann vorgesehen sein, dass die zweite Oberflächenbereiche als Erhebung 8 gegenüber dem als Vertiefung 9 ausgebildeten ersten Oberflächenbereich ausgebildet ist. Hierbei sind die Nanopartikel 4 auf der dem Substrat 2 abgewandten Seite der Metallschicht 3 angeordnet. Dies ist beispielhaft in den Fig. 1 bis 3 dargestellt. In der Fig. 1 ist ein Ausschnitt aus einer erster bevorzugten Ausführungsform in Blickrichtung der Höhe dargestellt, wobei der in der Fig. 2 dargestellte Schnitt entlang der Linie A nur durch den ersten Oberflächenbereich führt. In Fig. 2 ist daher die als Metallschicht 3 durchgehend ausgebildete Metallbeschichtung 10 zu erkennen. In der Fig. 3 ist der Schnitt der Linie B aus Fig.1 dargestellt, wobei dieser Schnitt sowohl durch die Metallschicht 3 als auch durch ein Nanopartikel 4 führt. Wie in Fig. 3 zu erkennen ist der gesamte Schichtaufbau im zweiten Oberflächenbereich gegenüber dem ersten Oberflächenbereich in der Höhe versetzt, wobei der Teil der Metallbeschichtung 10 im zweiten Oberflächenbereich das Nanopartikel 4 ausbildet. Der Höhenunterschied zwischen der ersten Höhe und der zweiten Höhe ist in Fig. 3 durch mit h gekennzeichnete Doppelpfeile angedeutet. Ein Abstand einer Oberseite der Metallschicht 3 zu der Unterseite des Nanopartikels 4 beträgt hierbei den Höhenunterschied minus der Dicke der Metallschicht 3.

Alternativ kann vorgesehen sein, dass die zweite Oberflächenbereiche als Vertiefung 9 gegenüber dem als Erhebung 8 ausgebildeten ersten Oberflächenbereich ausgebildet ist. Hierbei sind die Nanopartikel 4 auf der dem Substrat 2 zugewandten Seite der Metallschicht 3 angeordnet.

Der Höhenunterschied zwischen der Erhebung 8 und der Vertiefung 9 kann insbesondere kleiner als 200 nm, bevorzugt kleiner als 100 nm sein.

Weiters kann der Höhenunterschied zwischen der Erhebung 8 und der Vertiefung 9 kann insbesondere größer als 10 nm, bevorzugt größer 30 nm sein.

Besonders bevorzugt kann der Höhenunterschied größer als die Dicke der Metallschicht 3 und der Nanopartikel 4 sein, um einen Kontakt der Metallschicht 3 mit den Nanopartikel 4 zu unterbinden.

Weiters kann vorgesehen sein, dass die Dicke der zweiten Schicht 6 eines transparenten Festkörpers größer ist als der Höhenunterschied. Dadurch werden die äußeren Ränder der Nanopartikel 4 von der Schicht 6 eines transparenten Festkörpers umgeben und sind derart gegenüber einem Kontakt von Außen geschützt.

Insbesondere kann vorgesehen sein, dass sämtliche Nanopartikel 4 zur Metallschicht 3 den gleichen Höhenunterschied aufweisen.

Alternativ kann vorgesehen sein, dass die Nanopartikel 4 unterschiedliche Höhenunterschiede zu der Metallschicht 3 aufweisen.

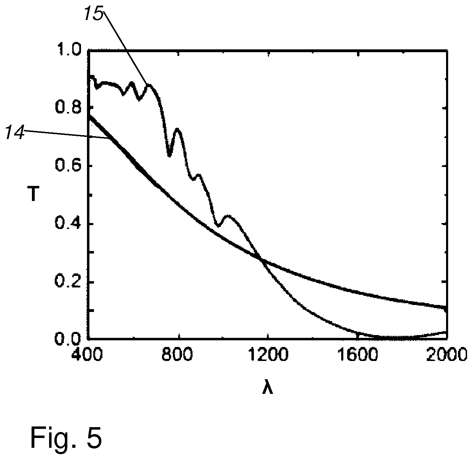

In Fig. 5 ist in einem Diagramm dargestellt, wobei die Abszisse die Wellenlänge λ der elektromagnetischen Strahlung in nm darstellt und die Ordinate die Transmission T als ein Wert zwischen 0 und 1. Eine erste Transmissionskurve 14 ist die Transmission einer 10 nm dicken Silberschicht, wie diese häufig als Infrarotsperrfilter für Scheiben verwendet wird. Es ist ersichtlich, dass die erste Transmissionskurve 14 ausgehend vom sichtbaren Bereich mit steigender Wellenlänge stetig abnimmt. Eine zweite Transmissionskurve 15 ist die Transmission einer dritten bevorzugten Ausführungsform des optischen Filters 1 mit ebenfalls einer 10 nm dicken Silberschicht als Metallschicht 3.

Die dritte Ausführungsform des optischen Filters 1 entspricht im Aufbau von Metallschicht 3 und Nanopartikel 4 der ersten bevorzugten Ausführungsform, allerdings mit dem Unterschied, dass die Nanopartikel 4 eine kreisrunde Form mit einem Durchmesser von 300 nm aufweisen, wobei die Nanopartikel 4 periodisch als Gitterpunkte eines gedachten quadratischen Gitters angeordnet sind. Der mittlere Abstand der Nanopartikel 4 zueinander beträgt 400 nm, wobei hier der mittlere Abstand der Abstand eines Nanopartikels 4 zu den vier nächsten Nanopartikeln 4, also einer Gitterperiode, ist.

In der dritten bevorzugten Ausführungsform ist die erste Schicht 5 eines transparenten Festkörpers und die zweite Schicht 6 eines transparenten Festkörpers aus ZnO ausgebildet und weisen jeweils eine Dicke von 50 nm auf. Der Höhenunterschied um welchen die Metallschicht 3 gegenüber den Nanopartikeln 4 versetzt ist beträgt 40 nm.

Es ist gut erkennbar, dass die zweite Transmissionskurve 15 im Bereich des sichtbaren Lichts bis 700 nm durchgehend ein sehr hoher Transmissionsgrad von über 80% erreicht werden kann. Ab 700 nm fällt die Transmission dann ab um bei 1200 nm geringer zu werden als die erste Transmissionskurve 14.

Alternativ kann vorgesehen sein, dass der Oberflächenstrukturierungsschritt nach dem Beschichtungsschritt erfolgt. Eine derart aufgebaute Anordnung von Metallschicht 3 und Nanopartikel 4 ist für die zweite bevorzugte Ausführungsform im Querschnitt in Fig. 4 dargestellt, wobei für die Fig. 4 die Aufsicht wie in Fig. 1 aussieht und der Schnitt durch die Linie A in Fig. 1 wie in Fig. 2.

Bevorzugt kann bei dem Verfahren vorgesehen sein, dass in dem Beschichtungsschritt die Metallschicht 3 als eine Metallbeschichtung 10 aufgebracht wird, dass auf der Metallschicht 3 zumindest eine Trennschicht 11 aufgebracht wird, dass nachfolgend zu dem Beschichtungsschritt der Oberflächenstrukturierungsschritt durchgeführt wird, und dass in dem Oberflächenstrukturierungsschritt auf der Trennschicht 11 die Nanopartikel 4 aufgebracht werden.

Hierbei kann beim optischen Filter 1 vorgesehen sein, dass die Metallschicht 3 im Wesentlichen durchgehend ist, und dass die Nanopartikel 4 von der Metallschicht 3 durch die elektrisch isolierende Trennschicht 11 getrennt sind. Die Trennschicht 11 kann insbesondere zumindest eine der Schichten 5,6 eines transparenten Festkörpers sein.

Abgesehen von der umgekehrten Reihenfolge von Beschichtungsschritt und Oberflächenstrukturierungsschritt unterscheidet sich die zweite bevorzugte Ausführungsform von der ersten bevorzugten Ausführungsform dadurch, dass die gesamte Metallbeschichtung 10 die Metallschicht 3 ausbildet, wobei die Metallschicht 3 als geschlossene Fläche ausgebildet werden kann, und dass die Nanopartikel 4 erst nachträglich auf der Trennschicht 11 erzeugt werden. Vorteilhaft an der zweite bevorzugte Ausführungsform des optischen Filters 1 gegenüber der ersten bevorzugten Ausführungsform des optischen Filters 1 ist, dass auch chemische Gasabscheidungsverfahren, sogenannte CVD Verfahren, für den Beschichtungsschritt möglich. Weiters können die Nanopartikel sowohl in einem Bottom-Up als auch Top-Down Verfahren erzeugt werden sowie aus einer Lösung abgeschieden werden, welche die Nanopartikeln 4 enthält.

Insbesondere kann vorgesehen sein, dass im Beschichtungsschritt nach der Trennschicht 11 eine weitere Metallbeschichtung 12 aufgebracht wird, und dass in dem Oberflächenstrukturierungsschritt die weitere Metallbeschichtung 12 bis auf die Nanopartikel 4 ausbildende Bereiche wieder entfernt wird. Hierbei umfasst der Oberflächenstrukturierungsschritt ein abtragendes Verfahren, insbesondere Nanoprägelithographie, welches die weitere Metallbeschichtung 12 bis auf die Nanopartikel 4 wieder abträgt.

Bei einer vierten bevorzugten Ausführungsform des optischen Filters 1, welche eine ähnliche Transmissionskurve aufweist wie die dritte bevorzugte Ausführungsform des optischen Filters 1, ist die Form und die Anordnung der Nanopartikel 4 gleich zu der dritten bevorzugten Ausführungsform des optischen Filters 1, wobei die Metallschicht 3 und die Nanopartikel 4 aus Silber sind und eine Dicke von 10 nm aufweisen. Die Metallschicht 3 ist zwischen zwei Schichten 5,6 aus ZnO mit je einer Dicke von 40 nm eingebettet. Auf diesem Schichtaufbau wird ein weiterer Schichtaufbau bestehend aus der weiteren Metallbeschichtung 12, wobei die weitere Metallbeschichtung 12 zwischen zwei weiteren Schichten 5,6 aus ZnO mit je einer Dicke von 10 nm eingebettet ist, aufgebracht. In dem Oberflächenstrukturierungsschritt wird der gesamte weitere Schichtaufbau bis auf jene Bereiche wieder vollständig abgetragen, welche die Nanopartikel ausbilden. Die zwischen der Metallschicht 3 und den Nanopartikel angeordnete Schichten 5,6 dem transparenten Festkörper bilden die Trennschicht 11 aus.

## Patentansprüche

1. Optischer Filter (1) umfassend ein im Wesentlichen durchsichtiges Substrat (2) und eine zumindest mittelbar auf das Substrat (2) aufgebrachte und transluzente Metallschicht (3), **dadurch gekennzeichnet, dass** auf einer Seite der Metallschicht (3) eine Vielzahl an elektrisch leitfähigen Nanopartikeln (4) angeordnet sind, und dass die einzelnen Nanopartikeln (4) sowohl von der Metallschicht (3) als auch untereinander beabstandet sind.

2. Optischer Filter (1) nach Anspruch 1, **dadurch gekennzeichnet, dass** eine Dicke der Metallschicht (3) und/oder eine Dicke der Nanopartikel (4) kleiner als 30 nm, insbesondere kleiner als 15 nm, ist.

3. Optischer Filter (1) nach Anspruch 1 oder 2, **dadurch gekennzeichnet, dass** die Nanopartikel (4) in zumindest einer Raumrichtung eine Erstreckung zwischen 100 nm und 800 nm, insbesondere zwischen 200 nm und 400 nm, aufweisen.

4. Optischer Filter (1) nach einem der Ansprüche 1 bis 3, **dadurch gekennzeichnet, dass** ein mittlerer Abstand der Nanopartikel (4) zueinander zwischen 200 nm und 5000 nm, insbesondere 300 nm bis 1000 nm, beträgt.

5. Optischer Filter (1) nach einem der Ansprüche 1 bis 4, **dadurch gekennzeichnet, dass** auf zumindest einer Seite, insbesondere auf beiden Seiten, der Metallschicht (3) und/oder der Nanopartikeln (4) eine Schicht (5,6) eines transparenten Festkörpers angeordnet ist.

6. Optischer Filter (1) nach einem der Ansprüche 1 bis 5, **dadurch gekennzeichnet, dass** das Substrat (2) ein Oberflächenrelief mit durch Flanken (7) voneinander getrennte Erhebungen (8) und Vertiefungen (9) aufweist, und dass die Flanken (7) derart ausgebildet sind, dass eine zumindest mittelbar auf das Substrat (2) aufgebrachte Metallbeschichtung (10) durch das Oberflächenrelief in die untereinander beabstandete Metallschicht (3) und die Nanopartikel (4) aufgeteilt wird.

7. Optischer Filter (1) nach einem der Ansprüche 1 bis 5, **dadurch gekennzeichnet, dass** die Metallschicht (3) im Wesentlichen durchgehend ist, und dass die Nanopartikel (4) von der Metallschicht (3) durch eine Trennschicht (11) getrennt sind.

8. Optischer Filter (1) nach einem der Ansprüche 1 bis 7, **dadurch gekennzeichnet, dass** der optische Filter (1) als Infrarotsperrfilter ausgebildet ist.

9. Fensterscheibe mit einem optischen Filter (1) nach einem der Ansprüche 1 bis 8 auf zumindest einer Seite der Fensterscheibe.

10. Verfahren zum Herstellen eines optischen Filters (1), wobei auf ein im Wesentlichen durchsichtiges Substrat (2) zumindest mittelbar eine transluzente Metallschicht (3) aufgebracht wird, wobei auf einer Seite der Metallschicht (3) eine Vielzahl an elektrisch leitfähigen Nanopartikeln (4) erzeugt werden, wobei die einzelnen Nanopartikeln (4) sowohl von der Metallschicht (3) als auch untereinander beabstandet sind.

11. Verfahren nach Anspruch 10, **dadurch gekennzeichnet, dass** die Nanopartikeln (4) durch eine Kombination eines Beschichtungsschrittes und eines Oberflächenstrukturierungsschrittes erzeugt werden.

12. Verfahren nach Anspruch 11, **dadurch gekennzeichnet, dass** der Oberflächenstrukturierungsschritt durch Nanoprägelithographie erfolgt.

13. Verfahren nach Anspruch 11 oder 12, **dadurch gekennzeichnet, dass** im Beschichtungsschritt nacheinander eine erste Schicht (5) eines transparenten Festkörpers, eine Metallbeschichtung (10) und eine zweite Schicht (6) eines transparenten Festkörpers auf dem Substrat (2) abgeschieden werden.

14. Verfahren nach einem der Ansprüche 11 bis 13, **dadurch gekennzeichnet, dass** in dem Oberflächenstrukturierungsschritt in das Substrat (2) ein Oberflächenrelief mit durch Flanken (7) voneinander getrennte Erhebungen (8) und Vertiefungen (9) ausgebildet wird, und dass nachfolgend zu dem Oberflächenstrukturierungsschritt der Beschichtungsschritt durchgeführt wird.

15. Verfahren nach einem der Ansprüche 11 bis 13, **dadurch gekennzeichnet, dass** in dem Beschichtungsschritt die Metallschicht (3) als eine Metallbeschichtung (10) aufgebracht wird, dass auf der Metallschicht (3) zumindest eine Trennschicht (11) aufgebracht wird, dass nachfolgend zu dem Beschichtungsschritt der Oberflächenstrukturierungsschritt durchgeführt wird, und dass in dem Oberflächenstrukturierungsschritt auf der Trennschicht (11) die Nanopartikel (4) aufgebracht werden.
